# EUROPÄISCHE PATENTANMELDUNG

(11) **EP 3 901 780 A1**
(43) Veröffentlichungstag der Anmeldung: **27.10.2021**
(21) Anmeldenummer: 20170388.1
(22) Anmeldetag: 20.04.2020
(51) Int. Cl.: G06F 15/78

(54) **DIGITALE SCHALTANORDNUNG UND VERFAHREN ZUR KONFIGURATION ZUMINDEST EINER KONFIGURIERBAREN HARDWAREKOMPONENTE**

(71) Anmelder: Siemens Aktiengesellschaft, 80333 München (DE)
(72) Erfinder: Belhachemi, Omar, 80639 München (DE); Falk, Rainer, 85586 Poing (DE); Feist, Christian Peter, 80689 München (DE); Maftun, Aliza, 81549 München (DE); Papagudi Subrahmanyam, Niranjana, 81829 München (DE); Seuschek, Hermann, 81373 München (DE); Zeschg, Thomas, 81543 München (DE)

(57) **Zusammenfassung**

Die Erfindung beansprucht eine Digitale Schaltanordnung zur Konfiguration zumindest einer konfigurierbaren Hardwarekomponente (RHW),
aufweisend:
- zumindest eine solche konfigurierbare Hardwarekomponente, die dazu eingerichtet ist, eine einbringbare und/oder bereits eingebrachte Konfiguration auf eingehende Daten anzuwenden und gegebenenfalls wenigstens einen Ergebniswert zu erzeugen,
- eine Konfigurationsauswahllogik (L), die dazu ausgelegt ist, aus mehreren möglichen Konfigurationen, eine Konfiguration auf der Basis von konfigurationsbezogenen Metainformationen in den eingehenden Daten auszuwählen und in die konfigurierbare Hardwarekomponente einzubringen.

## Beschreibung

Die Erfindung betrifft eine Digitale Schaltanordnung und ein Verfahren zur Konfiguration zumindest einer konfigurierbaren Hardwarekomponente.

Die vorliegende Erfindung liegt allgemein auf dem Gebiet der elektronischen Systeme und digitalen Schaltanordnungen, insbesondere der integrierten Schaltungen wie z.B. Field Programmable Gate Arrays (FPGAs). Ein Aspekt der vorliegenden Erfindung bezieht sich auf einen Halbleiterbaustein bzw. Chip, der in einer elektronischen Einrichtung bzw. System, z.B. einem (IOT-)Gerät, Feldgerät, Edge-Gerät oder einem Controller, integriert oder eingesetzt sein kann. Eine elektronische Einrichtung kann dabei ein oder mehrere digitale Schaltanordnungen aufweisen. Eine digitale Schaltanordnung, beispielsweise ein Halbleiterbaustein, kann hierbei vor allem wenigstens eine Prozessoreinheit, ein Bussystem, gegebenenfalls eine interne Speichereinheit (z.B. Cache, Flash Memory, ROM) und zumindest eine Schnittstelle zum Anbinden einer externen Speichereinheit (RAM) und zumindest eine Konfigurationsschnittstelle für einen Konfigurationszugriff von Extern umfassen. Die Anwendungen, für die diese Schaltungen konfiguriert werden, können GPU-Programme, Kryptoalgorithmusprogramme, Bild-/Video- bzw. Sprachverarbeitungsprogramme sowie auch Programme für Künstliche Intelligenz (KI), vor allem Neuronale Netzwerke sein. Diese Anwendungen sind zumeist daten- und rechenintensiv.

Dafür werden oft Hardwarebeschleuniger in der Architektur solcher Systeme eingeführt, um diese komplexen Anwendungen besser verarbeiten zu können. Diese Hardwarebeschleuniger bestehen in vielen Fällen aus rekonfigurierbaren Hardwarekomponenten, die von anwendungsspezifischen integrierten Schaltungen mit konfigurierbaren Bereichen, GPUs (Graphic Processing Units) bis hin zu Field-programmierbaren Gate-Arrays (FPGAs) reichen, einschließlich der FPGAs, die partielle Neukonfiguration (PARTIAL Reconfiguration, abgekürzt PR) unterstützen, um eine dynamische Neuprogrammierung ausgewählter Regionen des FPGA während des Betriebs zu ermöglichen, d.h. während der Rest der Logik betriebsbereit bleibt. Dies ermöglicht für elektronische Einrichtungen, auf denen solche Hardwarekomponenten verbaut sind, auf flexible Art und Weise eine erhöhte parallele Bearbeitung von Daten. Die Rekonfigurierbarkeit der Hardwarekomponenten bietet eine ressourcensparende (Platz, Stromverbrauch, Kosten) Möglichkeit, unterschiedliche Funktionen durch das Rekonfigurieren der Hardwarekomponenten zu realisieren. Jedoch ist die Anzahl der verfügbaren konfigurierbaren Hardwarekomponenten begrenzt. Um diese Ressourcen bei Spitzenlastbedingungen effektiv nutzen zu können und wenn mehrere Anwendungen gleichzeitig Ressourcen benötigen, ist eine intelligente, effiziente und praktischere Lösung für die Planung dieser Anwendungsaufgaben auf der entsprechenden (re-)konfigurierbaren Hardwarekomponente wichtig.

Der Erfindung liegt daher die Aufgabe zugrunde, eine digitale Schaltanordnung bzw. ein Verfahren anzugeben, durch welches solche (re-)konfigurierbaren Hardwarekomponenten effizient eingesetzt werden können.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht eine digitale Schaltanordnung zur Konfiguration zumindest einer konfigurierbaren Hardwarekomponente, aufweisend:
- zumindest eine solche konfigurierbare Hardwarekomponente, die dazu eingerichtet ist, eine einbringbare und/oder bereits eingebrachte Konfiguration auf eingehende Daten anzuwenden und gegebenenfalls wenigstens einen Ergebniswert zu erzeugen,
- eine Konfigurationsauswahllogik, die dazu ausgelegt ist, aus mehreren möglichen Konfigurationen, eine Konfiguration auf der Basis von konfigurationsbezogenen Metainformationen in den eingehenden Daten auszuwählen und in die konfigurierbare Hardwarekomponente einzubringen.

Eine Metainformation kann einen Dringlichkeitswert bzw. Prioritätswert je nach Datengröße und/oder nach der Notwendigkeit einer Echtzeitverarbeitung der Daten und/oder nach dem Typ einer Anwendung, für die die Daten bestimmt sind, ausdrücken. Die Konfigurationsauswahllogik erkennt in den Daten die Metainformation und damit den entsprechenden Dringlichkeitswert.

Die eingehenden Daten können aus mehreren Datenströmen bestehen, die jeweils konfigurationsbezogene Metadaten aufweisen. Die Datenströme können zwischengepuffert werden. Die Konfigurationsauswahllogik kann dazu ausgelegt sein, aus mehreren möglichen Konfigurationen eine Konfiguration auf der Basis der den Datenströmen zugeordneten konfigurationsbezogenen Metainformationen in den Datenströmen der eingehenden Daten auszuwählen und in die konfigurierbare Hardwarekomponente einzubringen. Weiterhin ist es möglich, dass die Konfigurationsauswahllogik den Füllstand der zwischengespeicherten Datenströme bei der Auswahl der Konfigurationen zusätzlich berücksichtigt.

Aus der Konfiguration der (re-)konfigurierbaren Hardwarekomponente kann ein in ihr gespeicherter und ladbarer Anwendungsprogrammcode bzw. Anwendungskonfiguration resultieren, dessen Ausführung die Daten verarbeiten und gegebenenfalls den wenigstens einen Ergebniswert zurückliefern kann.

Es können beispielsweise Daten in Form von mehreren Bildern verarbeitet werden. Zu jedem Bild kann dann ein Ergebniswert bereitgestellt werden.

Unter einer Konfiguration kann vorliegend verstanden werden, dass ein Anwendungsprogrammcode z.B. für eine KI-Anwendung bzw. Bildverarbeitungsanwendung in diese Hardwarekomponente eingebracht bzw. implementiert wird. Ein Aspekt dabei ist, dass die Priorität (z.B. kritisch, dringlich) verschiedener zu verarbeitender Daten bzw. Datensätze ermittelt wird. Die (re-)konfigurierbare Hardware ist so konfiguriert, dass der Datensatz mit der höchsten Priorität verarbeitet wird. Konfigurierbar bzw. re-konfigurierbar bedeutet in diesem Kontext, dass die Hardwarekomponenten nicht nur einmalig, sondern beliebig oft neu- bzw. umkonfigurierbar sind. Die Konfigurationsauswahllogik kann auf unterschiedliche Art und Weise implementiert werden (z.B. User-Space Softwareprogramm, Kernel-Treiber, dedizierter Chip, FPGA-Konfiguration, etc.), je nach Ziel-Hardwarekomponente.

Wie eingangs erwähnt, gibt es Hardwarekomponenten, die eine partielle Re-Konfiguration unterstützen. Die Konfigurationsauswahllogik kann auch so ausgelegt bzw. erweitert werden, dass die Konfiguration in einem teilweise konfigurierbaren bzw. rekonfigurierbaren Bereich einer Hardwarekomponente eingebracht wird. Sie verarbeitet die entsprechenden Daten auf Abruf dynamisch. Mit der partiellen (Re-)konfiguration wird das Laden mehrerer, gleicher Hardwaremodule (z.B. Bildverarbeitungslogik) auf einer Hardwarekomponente (hier FPGA) ermöglicht. Die Metadaten können in diesem Fall auch verwendet werden, um zu entscheiden, wie viele Instanzen eines ladbaren Anwendungsprogrammcodes (d.h. konkrete Ausprägung eines Anwendungsprogrammcodes) geladen werden sollen, sofern die dafür benötigten Hardwarekomponenten ausreichen bzw. vorhanden sind.

Ein Beispiel hierfür bieten z.B. FPGAs, welche eine partielle Rekonfiguration unterstützen. Im Rahmen der Erfindung kann in einer Ausführungsform der gesamte FPGA rekonfiguriert werden, also der Hauptbitstrom ausgetauscht werden. Sofern möglich, können allerdings auch nur Teilbereiche durch entsprechende Teilbitstrome rekonfiguriert werden, während die restliche Logik weiterbetrieben werden kann.

Ein weiterer Aspekt der Erfindung ist ein Verfahren zur Konfiguration zumindest einer konfigurierbaren Hardwarekomponente, aufweisend folgende Schritte:
- Anwenden einer einbringbaren und/oder bereits eingebrachten Konfiguration auf eingehende Daten durch zumindest eine solche konfigurierbare Hardwarekomponente gegebenenfalls Erzeugen wenigstens eines Ergebniswerts,
- Auswählen einer Konfiguration auf der Basis von konfigurationsbezogenen Metainformationen in den eingehenden Daten aus mehreren möglichen Konfigurationen durch eine Konfigurationsauswahllogik und Einbringen der ausgewählten Konfiguration in die konfigurierbare Hardwarekomponente.

Das Verfahren, die Anordnungen, Einrichtungen, Einheiten bzw. Geräte, Module und Computerprogramm(produkte) können entsprechend der Weiterbildungen/Ausführungsformen der vorgenannten digitalen Schaltanordnung und deren Weiterbildungen/Ausführungsformen und umgekehrt ausgebildet sein.

Eine Weiterbildung der Erfindung sieht vor, dass eine Einheit bzw. Komponente, insbesondere eine Kommunikationseinheit bzw. Netzwerkkomponente, als eine Hardware-Komponente ausgebildet ist. Eine Einheit bzw. Komponente kann einen Prozessor umfassen. Subeinheiten einer größeren Einheit bzw. Hardwarekomponente können in Software, Firmware bzw. wiederum in Hardware implementiert sein.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

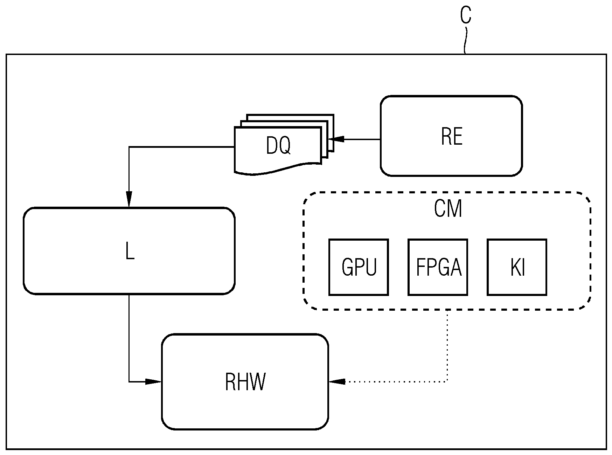

### Kurzbeschreibung der Zeichnung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur eine mögliche Ausführungsform einer digitalen Schaltanordnung.

### Ausführungsbeispiele der Erfindung

Die Figur zeigt beispielhaft ein Gerät bzw. System, das auf einem Halbleiterbaustein bzw. Chip implementiert ist.

Die Figur zeigt einen Chip C, der in einer elektronischen Einrichtung, z.B. einem (IOT-)Gerät oder einem Controller, integriert oder eingesetzt werden kann, wobei diese Ausführungsform speziell ist, da im Beispiel CPU und FPGA in einem System auf dem Chip C integriert sind). Andere Ausführungsformen sind denkbar.

Die Erfindung bezieht sich insbesondere auf rekonfigurierbare Hardwarekomponenten RHW, d.h. solche, die für die Realisierung einer bestimmten Funktionalität konfiguriert (programmiert, geladen) werden können. Es kann sich um einen KI-Beschleuniger KI wie eine TPU (Tensor-Verarbeitungseinheit), eine GPU (Graphic Processing Unit) gekennzeichnet mit GPU, einen nicht dargestellten ASIC (Application Specific Integrated Circuit) handeln, der rekonfigurierbare Teile (z.B. einen oder mehrere eingebettete FPGAs) enthält, einen FPGA gekennzeichnet mit FPGA oder einen teilweise re-konfigurierbaren FPGA bereitstellt. Eine rekonfigurierbare Hardwarekomponente kann auch eine Laufzeit- bzw. Ausführungsumgebung RE umfassen, die Hardware-Apps unterstützt, d.h. eine re-konfigurierbare Hardwarekomponente, die dedizierte, zur Laufzeit-rekonfigurierbare Bereiche enthält.

Ein Aspekt der Erfindung ist eine dynamische Planung eines oder mehrerer Hardwaremodule CM auf re-konfigurierbaren Hardwarekomponenten RHW, basierend auf den Daten, die mit einem oder mehreren Hardwaremodulen bzw. mehreren Hardwaremodulinstanzen (konkrete Ausprägung eines Hardwaremoduls, wobei jede Ausprägung desselben Hardwaremoduls vom selben Typ ist) verarbeitet werden sollen. Diese Daten bilden im Beispiel einen oder mehrere Datenstroms bzw. eine oder mehrere Datenwarteschlagen DQ. Ein Aspekt dabei ist, dass die Priorität (z. B. Kritisch, Dringlichkeit) verschiedener zu verarbeitender Daten bzw. Datensätze erkannt und ermittelt wird. Die rekonfigurierbare Hardwarekomponente ist so konfiguriert, dass der Datensatz mit der höchsten Priorität verarbeitet wird. Die Priorität des Datensatzes (beziehungsweise eines zwischengespeicherten Datenstroms oder Datenstromabschnitts) kann abhängig von Metadaten ermittelt werden, die im Datensatz enthalten oder diesem zugeordnet sind. Weiterhin kann die Priorität abhängig von einem Füllstand eines Zwischenspeichers, vorliegend beispielhaft die Datenwarteschlange DQ, ermittelt werden, der zum Zwischenspeichern von Datensätzen oder von Datenstromabschnitten geeignet ist. Weiterhin kann dabei eine aktuelle Auslastung von weiteren, nicht rekonfigurierbaren Hardwarekompontenen der Schaltanordnung berücksichtig werden, die für eine Bearbeitung der Datensatzes beziehungsweise für eine Weiterbearbeitung des bearbeiteten Datensatzes, d.h. des Ergebniswerts oder der mehreren Ergebniswerte, verwendbar sind. Weiterhin kann bei der Bestimmung der Priorität eine aktuelle Auslastung von Peripheriegeräten berücksichtigt werden. Ein Hardwaremodul kann ein Anwendungsprogammcode, beispielsweise ein Bildverarbeitungsprogramm für eine GPU, ein Deep Learning-Algorithmus einer KI sein, der als TPU-Programm implementiert ist, oder sogar eine Reihe kryptografischer Operationen, sein, die als FPGA-Bitstrom geladen werden können. In der Ressourcenplanung ist das Hardwaremodul die ausführbare Aufgabe, die auf die Daten in der Datenwarteschlange(n) (z.B. ein DMA-Puffer, Dateien in einem Dateisystem, allg. ein User- oder Kernel-Space Speicherbereich) durchgeführt wird, die von einer anderen Komponente auf dem Gerät, insbesondere einer Ausführungsumgebung RE bzw. einer CPU, zur Verfügung gestellt werden. Eine parallele Ausführung dieser Hardwaremodule CM auf der re-konfigurierbaren Hardwarekomponente ist in der Regel in folgenden Fällen nicht möglich:
- Zwei Hardwaremodule benötigen dieselben Peripheriegeräte. In diesen Fall müssen verschiedene Hardwaremodule auf dieselbe Hardwarekomponente geladen werden, z B. eine einzelne Hardwarekomponente z.B. TPU.
- Das Hardwaremodul hängt von einer anderen gemeinsamen Ressource ab und kann daher nicht parallel ausgeführt werden. In diesem Fall, abhängig von der Art und den Eigenschaften (=konfigurationsbezogene Metainformationen) der eingehenden Daten in der Warteschlange(n), die auf die Verarbeitung warten, z.B. eine Bilddatei, Sprachdaten für Spracherkennung oder eine große Datei für die Verschlüsselung, kann eine Konfigurationsauswahllogik L, eingehende Daten stammend aus der Datenwarteschlange DQ auf einen Prioritätswert prüfen und weist diesen das entsprechende Hardwaremodul (oder die Aufgabe) auf der entsprechenden rekonfigurierbaren Hardware zu, auf der sie ausgeführt werden kann bzw. auf der ein ladbares Anwendungsprogramm bzw. Anwendungsprogrammcode diese verarbeitet und ggf. wenigstens einen Ergebniswert erzeugt und ggf. zurückliefert. Das zugewiesene Hardwaremodul bzw. Aufgabe ist somit eine Konfigurationsauswahl von mehreren möglichen Konfigurationen. Diese Prioritätswerte können basierend auf verschiedenen Kriterien wie dem Anwendungstyp mithilfe eines sogenannten Typtags zum Klassifizieren von Daten in der Datenwarteschlange zugewiesen werden.

Die Prioritätswerte der Daten können auch auf ihrer Größe (z. B. durch Anwendung des gewichteten Fair-Queuing-Prinzips) oder der Zielhardware ((re-)konfigurierbare Hardwarekomponente) oder des Hardwaremoduls basieren. Die Planung und damit das Laden von Hardwaremodulen kann auch nach einem einfachen First-Come-First-Service-Prinzip oder einem Round-Robin-Mechanismus durchgeführt werden. Der Prioritätswert könnte auch auf Datenkritikalität basieren (wie Echtzeit oder Nicht-Echtzeit) .

Wenn sich z.B. Sprachdaten für ein Spracherkennungssystem in der Datenwarteschlange befinden, zusammen mit einigen Bilddaten, die mit einer neuronalen Netzwerkimplementierung auf einem einzelnen FPGA verarbeitet werden sollen, und diese beide auf ihre Verarbeitung warten, prüft und liest die Konfigurationsauswahllogik L die Daten und weist basierend auf deren konfigurationsbezogenen Metainformationen bzw. Prioritätswert bzw. Anwendungstyp eine Konfiguration bzw. Anwendungsprogramm zu, dessen Ausführung die Daten verarbeiten. Den beispielhaft erwähnten, eingehenden Sprachdaten, die in Echtzeit verarbeitet werden sollen, wird im Vergleich zu den Bilddaten eine höhere Priorität eingeräumt. Dann wählt die Konfigurationsauswahllogik eine Konfiguration aus, wonach dem Hardwaremodul (hier der FPGA-Bitstrom) entsprechend den Sprachdaten eine höhere Priorität eingeräumt wird und damit deren Verarbeitung bevorzugt ermöglicht. So kann eine Planung vom Einsatz von Hardwaremodulen dazu verwendet werden, um eines von mehreren Optimierungszielen in Szenarien zu erreichen, in denen Hardwarekomponenten ressourcenmäßig eingeschränkt sind. Dies ermöglicht einen flexiblen und dynamischen Einsatz der verfügbaren (re-)konfigurierbaren Hardwarekomponenten.
Als weiteres Beispiel hierfür sind FPGAs denkbar, die eine partielle Re-konfiguration unterstützen. Die vorhandene Konfiguration kann auch erweitert werden, um den Austausch von Anwendungsprogrammcodeteilen in einem teilweise rekonfigurierbaren Bereich des Hardwaremoduls (Teilbitstrom) zu ermöglichen. Bei Bedarf und bei räumlicher Verfügbarkeit können mehrere re-konfigurierbare Bereiche mit demselben oder unterschiedlichen Hardwaremodulen programmiert werden. Die erforderliche Re-Konfigurationszeit sollte in der dynamischen rekonfigurierbaren Logik für solche FPGAs berücksichtigt werden. Als solches kann es als weiterer Parameter verwendet werden, um zu bestimmen, wie eine oder mehrere verfügbare (re-)konfigurierbare Hardwarekomponenten konfiguriert werden können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Digitale Schaltanordnung zur Konfiguration zumindest einer konfigurierbaren Hardwarekomponente (RHW),
aufweisend:
- zumindest eine solche konfigurierbare Hardwarekomponente, die dazu eingerichtet ist, eine einbringbare und/oder bereits eingebrachte Konfiguration auf eingehende Daten anzuwenden und gegebenenfalls wenigstens einen Ergebniswert zu erzeugen,
- eine Konfigurationsauswahllogik (L), die dazu ausgelegt ist, aus mehreren möglichen Konfigurationen, eine Konfiguration auf der Basis von konfigurationsbezogenen Metainformationen in den eingehenden Daten auszuwählen und in die konfigurierbare Hardwarekomponente einzubringen.

2. Schaltanordnung nach dem vorhergehenden Anspruch, **dadurch gekennzeichnet, dass** aus der Konfiguration der konfigurierbaren Hardwarekomponente ein in ihr gespeicherter und ladbarer Anwendungsprogrammcode (CM) resultiert, dessen Ausführung die Daten verarbeiten und gegebenenfalls den wenigstens einen Ergebniswert zurückliefern kann.

3. Schaltanordnung nach einem der vorhergehenden Ansprüche, **dadurch gekennzeichnet, dass** eine Metainformation einen Dringlichkeitswert je nach Datengröße und/oder nach der Notwendigkeit einer Echtzeitverarbeitung der Daten und/oder nach dem Typ einer Anwendung, für die die Daten bestimmt sind, ausdrückt.

4. Schaltanordnung nach einem der vorhergehenden Ansprüche, **dadurch gekennzeichnet, dass** Konfigurationsauswahllogik dazu ausgelegt ist, dass die Konfiguration in einem teilweise konfigurierbaren Bereich der konfigurierbaren Hardwarekomponente eingebracht wird.

5. Verfahren zur Konfiguration zumindest einer konfigurierbaren Hardwarekomponente (RHW),
aufweisend folgende Schritte:
- Anwenden einer einbringbaren und/oder bereits eingebrachten Konfiguration auf eingehende Daten durch zumindest eine solche konfigurierbare Hardwarekomponente gegebenenfalls Erzeugen wenigstens eines Ergebniswerts,
- Auswählen einer Konfiguration auf der Basis von konfigurationsbezogenen Metainformationen in den eingehenden Daten aus mehreren möglichen Konfigurationen durch eine Konfigurationsauswahllogik und Einbringen der ausgewählten Konfiguration in die konfigurierbare Hardwarekomponente.

6. Verfahren nach dem vorhergehenden Anspruch, **dadurch gekennzeichnet, dass** aus der Konfiguration der konfigurierbaren Hardwarekomponente ein in ihr gespeicherter und ladbarer Anwendungsprogrammcode (CM) resultiert, dessen Ausführung die Daten verarbeitet und gegebenenfalls den wenigstens einen Ergebniswert zurückliefert.

7. Verfahren nach einem der vorhergehenden Verfahrensansprüche, **dadurch gekennzeichnet, dass** eine Metainformation einen Dringlichkeitswert je nach Datengröße und/oder nach der Notwendigkeit einer Echtzeitverarbeitung der Daten und/oder nach dem Typ einer Anwendung, für die die Daten bestimmt sind, ausdrückt.

8. Verfahren nach einem der vorhergehenden Verfahrensansprüche, **dadurch gekennzeichnet, dass** Konfigurationsauswahllogik dazu ausgelegt ist, dass die Konfiguration in einem teilweise konfigurierbaren Bereich der konfigurierbaren Hardwarekomponente eingebracht wird.
